# EUROPÄISCHE PATENTANMELDUNG

(11) **EP 1 286 061 A1**
(43) Veröffentlichungstag der Anmeldung: **26.02.2003**
(21) Anmeldenummer: 01810818.3
(22) Anmeldetag: 22.08.2001
(51) Int. Cl.: F16B 13/08

(54) **Kippdübel**

(71) Anmelder: ScorpioMediaGroup GmbH, 5012 Schönenwerd (CH)
(72) Erfinder: Eggenschwiler, Beat, 4600 Olten (CH)
(74) Vertreter: BOVARD AG - Patentanwälte

(57) **Zusammenfassung**

Ein Kippdübel (1) zur Befestigung an einem Tragteil (10), der mit einer Bohrung (9) ausgestattet ist und dessen hinterseitige Fläche (11) einen nicht zugänglichen Hohlraum begrenzt, umfasst einen Schaft (2), an welchem ein Kipphebel (4) angebracht ist. Dieser ist um einen eine Schwenkachse bildenden Bolzen (8) schwenkbar gelagert. Zum Einführen des Kippdübels (1) in den Tragteil (10) wird der Kipphebel (4) in Längsachsenrichtung des Schaftes (2) ausgerichtet und ist im eingeführten Zustand quer zur Längsachse des Schaftes (2) umschwenkbar. Um den Kippdübel (1) wieder herausnehmen zu können, ist im Schaft (2) eine im wesentlichen längs dazu verlaufende Öffnung (13) angebracht, deren kipphebelseitige Mündung (14) so angeordnet ist, dass sie zur Schwenkachse versetzt ist. In diese Öffnung (13) ist ein stiftförmiges Element (19) einführbar, mit welchem der Kipphebel (4) zurückschwenkbar ist, so dass der Kippdübel (1) aus dem Tragteil (10) herausgenommen werden kann.

## Beschreibung

Die vorliegende Erfindung bezieht sich auf einen Kippdübel zur Befestigung an einem Tragteil gemäss dem Oberbegriff des Patentanspruchs 1.

Derartige Kippdübel werden beispielsweise verwendet zum Aufhängen von Gegenständen an Tragteilen, deren Hinterseiten nicht zugänglich sind und einen Hohlraum aufweisen. Insbesondere dienen derartige Kippdübel als Befestigungselement zum Aufhängen von Decken an Trägern, beispielsweise Hohlprofilen. Diese Tragteile werden mit Bohrungen versehen, in welche jeweils ein Kippdübel eingesteckt wird, wobei im eingesteckten Zustand der Kipphebel verschwenkt wird, wodurch der Kippdübel im Tragteil gehalten wird. Der Kippdübel kann dann im Tragteil beispielsweise mit einer Spannmutter fixiert werden.

Derartige bekannte Kippdübel weisen den Nachteil auf, dass eine Wiederverwendung bzw. ein Herausnehmen aus dem Tragteil nicht möglich ist. Üblicherweise werden diese Kippdübel, wenn Sie nicht mehr gebraucht werden, abgeschnitten, der in den Tragteil hineinragende Teil mit dem Kipphebel wird in den Hohlraum eingestossen. Es ist somit auch nicht möglich, derartige Kippdübel zu kontrollieren, insbesondere wenn sie sich in einer relativ aggressiven Atmosphäre befinden, um gegebenenfalls Korrosionen feststellen zu können, welche die Tragfähigkeit derartiger Kippdübel beeinträchtigen können. Dies betrifft insbesondere den Bereich, der sich innerhalb des Tragteils befindet.

Die Aufgabe der Erfindung besteht nun darin, einen Kippdübel zu schaffen, der nicht nur einmal verwendbar ist, sondern der in einfacher Weise wieder aus dem Tragteil herausgenommen werden kann, insbesondere zu Kontrollzwecken.

Erfindungsgemäss erfolgt die Lösung dieser Aufgabe durch die im Anspruch 1 aufgeführten Merkmale.

Dadurch kann in einfacher Weise erreicht werden, dass mit der Verwendung des stiftförmigen Elementes der Kipphebel zum Herausnehmen des Kippdübels von der quer zur Längsachse des Schaftes umgeschwenkten Lage in die Längsachsenrichtung zurückgeschwenkt wird, wodurch der Kippdübel aus der Bohrung des Tragteils herausnehmbar ist. Dieser Kippdübel kann dann beispielsweise auf Beschädigung durch Korrosion untersucht werden und gegebenenfalls wieder verwendet werden.

In vorteilhafter Weise ist mindestens ein kipphebelseitiger Teilbereich des Schaftes mit einem Gewinde versehen, auf welches eine Spannmutter aufschraubbar ist. Dadurch kann der Kippdübel am Tragteil fixiert werden.

Eine vorteilhafte Ausgestaltung des Kippdübels besteht darin, dass der Bügel aus einem in den Schaft eingebrachten Schlitz besteht, und dass der Kipphebel zwischen den beiden durch den Schlitz gebildeten Stege angeordnet ist und um einen Bolzen, der in den beiden Stegen gehalten ist und die Schwenkachse bildet, schwenkbar ist. Dies ergibt eine einfache und kostengünstige Fertigung des Kippdübels.

Eine weitere vorteilhafte Ausgestaltung des Kippdübels besteht darin, dass der Kipphebel eine Breite aufweist, die kleiner ist, als die Breite des in den Schaft eingebrachten Schlitzes, und dass der eine Endbereich des Kipphebels mit einer Verdickung ausgestattet ist, während der andere Endbereich eine Anschlagfläche aufweist, die mit einer entsprechenden im Grund des Schlitzes angebrachten Anschlagfläche zusammenwirkt, wodurch die Schwenkbewegung des Kipphebels von der quer zur Längsachse des Schaftes umgeschwenkten Lage in die Längsachsenrichtung des Schaftes begrenzt ist. Durch die Verdickung wird in vorteilhafter Weise erreicht, dass der Schwerpunkt des Kipphebels nicht in der Schwenkachse liegt, so dass das Umschwenken des Kipphebels im in den Tragteil eingesetzten Zustand selbständig erfolgt. Die Anschlagflächen können so ausgebildet sein, dass der Kipphebel nicht vollständig in die Längsachsenrichtung des Schaftes ausrichtbar ist, sondern diesbezüglich etwas geneigt ist, wodurch das Umschwenken des Kipphebels im in den Tragteil eingesetzten Zustand gewährleistet ist.

In vorteilhafter Weise sind die Abmessungen in radialer Richtung des Kipphebels, wenn sich dieser in der in Längsachsenrichtung ausgerichteten Lage befindet, im wesentlichen nicht über die Mantelfläche des Schaftes vorstehend. Dadurch kann die Bohrung im Tragteil einen Durchmesser aufweisen, der nur geringfügig grösser ist als der des Schaftes, wodurch eine optimale Tragfähigkeit des Kippbügels erreicht wird.

Weitere vorteilhafte Ausgestaltungen der Erfindung ergeben sich aus den weiteren abhängigen Ansprüchen.

Eine Ausführungsform des erfindungsgemässen Kippdübels wird nachfolgend anhand der beiliegenden Zeichnung beispielhaft näher erläutert.

Es zeigt
Fig. 1 eine Ansicht auf einen erfindungsgemässen Kippdübel, der in den Tragteil eingesetzt ist, zum Teil im Schnitt;
Fig. 2 eine räumliche Darstellung des erfindungsgemässen Kippdübels gemäss Fig. 1 im in den Tragteil eingesetzten Zustand;
Fig. 3 und 4 eine seitliche Ansicht bzw. eine Ansicht von oben auf den erfindungsgemässen Kippdübel während des Einsetzvorganges in den Tragteil;
Fig. 5 bis 7 Ansichten des erfindungsgemässen Kippdübels in verschiedenen Stadien während des Herausnehmens aus dem Tragteil.

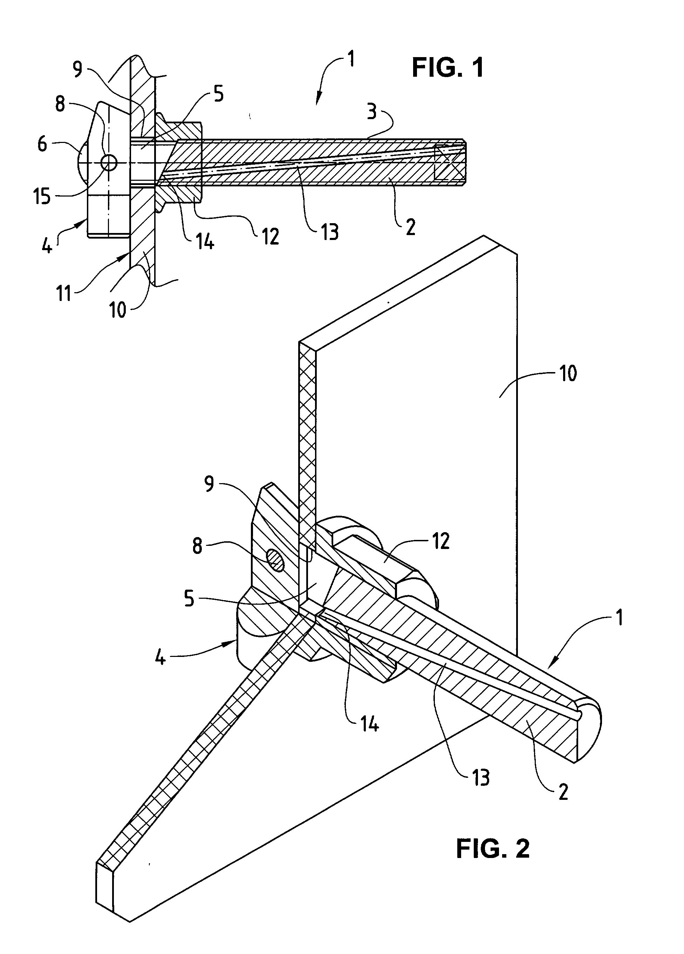

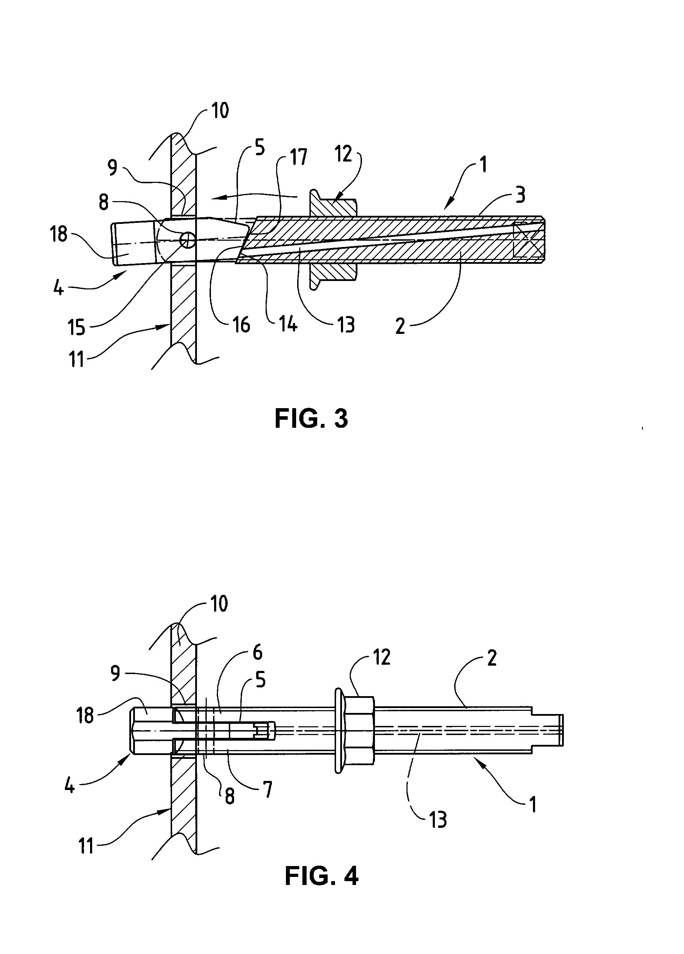

Der erfindungsgemässe Kippdübel 1 besteht, wie aus den Fig. 1 und 2 ersichtlich ist, aus einem Schaft 2, welcher im vorliegenden Ausführungsbeispiel über dessen ganze Länge zylindrisch ist und ebenfalls über die ganze Länge mit einem Gewinde 3 versehen ist. Das eine Ende dieses Schaftes 2 ist mit einem Kipphebel 4 ausgestattet. Hierzu ist an diesem Ende des Schaftes 2 ein Schlitz 5 (Fig. 4) angebracht, wodurch zwei Stege 6 und 7 gebildet werden, in welche ein Bolzen 8 eingesetzt ist, und um welchen der Kipphebel 4 schwenkbar ist.

In der Darstellung gemäss Fig. 1 und 2 ist der Kippdübel 1 in eine Bohrung 9 eines Tragteils 10 eingesetzt, wobei sich der Kipphebel 4 auf der hinterseitigen Fläche 11 des Tragteils 10 in quer zur Längsachse 11 des Schaftes 2 ausgeschwenkten Lage abstützt. Die hinterseitige Fläche 11 des Tragteiles 10 begrenzt einen nicht zugänglichen Hohlraum.

Auf den Schaft 2 aufgeschraubt ist eine Spannmutter 12, mit welcher der Schaft 2 bezüglich des Tragteils 10 fixiert werden kann. Der Tragteil 10 kann beispielsweise ein Hohlprofil sein, an welchem weitere Elemente aufgehängt werden müssen, es kann beispielsweise aber auch eine eine Decke bildende Platte sein. Auf das Gewinde 3 des Schaftes 2 können Halteelemente aufgeschraubt werden, an welchen die zu tragenden Elemente befestigbar sind.

Im Schaft 2 des Kippdübels 1 ist eine Bohrung 13 angebracht, die den Schaft 2 im wesentlichen in Längsrichtung und diagonal durchläuft. Die kipphebelseitige Mündung 14 dieser Bohrung 13 befindet sich im Grund des Schlitzes 5 und ist zur durch den Bolzen 8 gebildeten Schwenkachse 15 für den Kipphebel 4 versetzt. Der Anwendungszweck für diese Bohrung wird später noch im Detail beschrieben.

Zum Einführen des Kippdübels 1 in die Bohrung 9 des Tragteils 10 wird, wie aus den Fig. 3 und 4 ersichtlich ist, die Spannmutter 12 entlang des Schaftes 2 vom Kipphebel 4 weggeschraubt. Der Kipphebel 4 wird in eine Lage geschwenkt, in welcher er in Längsachsenrichtung des Schaftes 2 ausgerichtet ist, wie dies in den Fig. 3 und 4 dargestellt ist.

Hierzu weist der Kipphebel 4 eine Breite auf, die kleiner ist, als die Breite des in den Schaft 2 eingebrachten Schlitzes 5. Ferner ist der Kipphebel 4 mit einer Anschlagfläche 16 ausgestattet, die an einer entsprechend ausgestatteten Anschlagfläche 17 im Grund des Schlitzes 5 zur Anlage kommt. Die Anschlagflächen 16 und 17 sind hierbei so gestaltet, dass der Kipphebel bezüglich der Längsachse des Schaftes 2 leicht geneigt bleibt. Das der Anschlagfläche 16 des Kipphebels 4 gegenüberliegende Ende ist mit einer Verdickung 18 ausgestattet. Die Abmessungen des Kipphebels 4 in radialer Richtung sind hierbei im wesentlichen nicht über die Mantelfläche des Schaftes 2 vorstehend, so dass die Bohrung 9 des Tragteiles 10 einen Durchmesser aufweisen muss, der nur geringfügig grösser ist als der Durchmesser des Schaftes 2. Dadurch wird die Tragfähigkeit des erfindungsgemässen Kippdübels 1 optimal.

Wenn der Kippdübel 1 soweit in den Tragteil 10 bzw. dessen Bohrung 9 eingeführt ist, dass der Kipphebel 4 freigegeben wird, wird der Kipphebel 4 verschwenkt, was wegen der Verdickung 18 und dementsprechend grösseren Gewicht dieser Seite des Kipphebels und der leicht geneigten Lage bezüglich der Längsachse des Schaftes 2 selbständig erfolgt. Der Kippdübel 1 kann dann wieder soweit aus der Bohrung 9 des Tragteils 10 herausgezogen werden, bis der Kipphebel 4 sich an der hinterseitigen Fläche 11 des Tragteils 10 abstützt, wie dies aus den Fig. 1 und 2 ersichtlich ist. Die Spannmutter 12 kann dann angezogen werden, der Kippdübel 1 ist bezüglich des Tragteils 10 fixiert, die erforderlichen Tragelemente können aufgeschraubt werden.

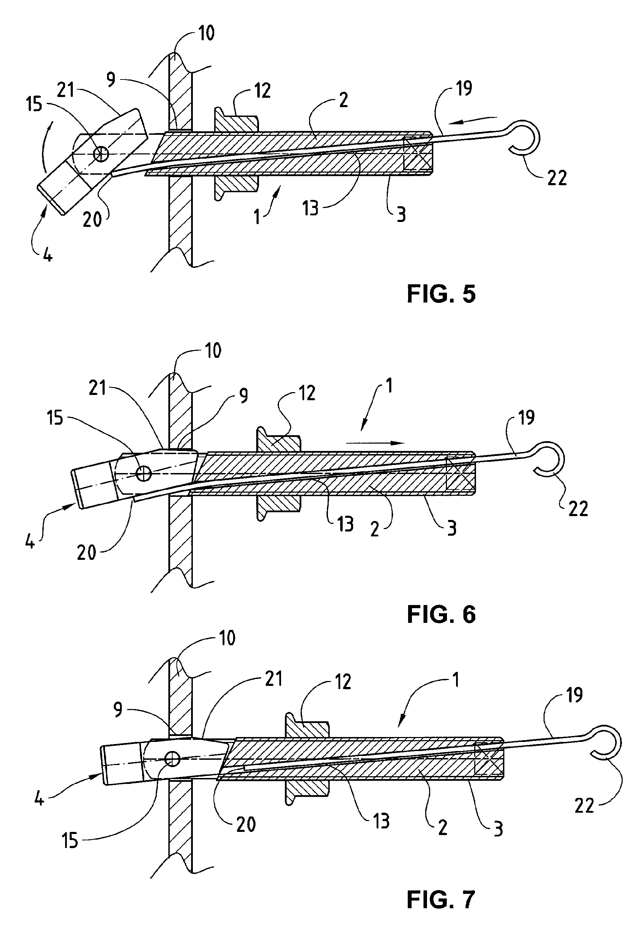

Wie aus den Fig. 5 bis 7 ersichtlich ist, wird zum Herausnehmen des Kippdübels 1 aus dem Tragteil 10 bzw. der entsprechenden Bohrung 9 die Spannmutter 12 gelöst. Der Kippdübel 1 wird um ein bestimmtes Mass in den Tragteil 10 hineingeschoben, bis der Kipphebel 4 freigegeben ist. In die Bohrung 13 wird dann ein aus einem Drahtstück gebildetes stiftförmiges Element 19 eingeschoben. Das eingeschobene Ende 20 des stiftförmigen Elementes 19 stösst an den Kipphebel 4 an, und bewirkt beim Weitereinführen, dass der Kipphebel 4 um die Schwenkachse 15 verschwenkt wird, da das Ende 20 des stiftförmigen Elementes 19 versetzt zur Schwenkachse 15 auf den Kipphebel 4 trifft.

Das stiftförmige Element 19 wird soweit eingeschoben, bis der Kipphebel 4 eine Position eingenommen hat, dass er in die Bohrung 9 hineingelangen kann. Hierzu ist der Kipphebel 4 mit einer Anschrägung 21 versehen, was diesen Vorgang erleichtert, wie dies aus Fig. 6 ersichtlich ist. Das stiftförmige Element 19 kann dann aus der Bohrung 13 weiter zurückgezogen werden, der Kippdübel 1 kann aus der Bohrung 9 des Tragteils 10 herausgenommen werden, wie dies in Fig. 7 dargestellt ist, der Kipphebel 4 wird hierbei in die entsprechende längsausgerichtete Lage verschwenkt. Das stiftförmige Element 19 kann zur besseren Bedienbarkeit noch mit einem Handgriff 22 ausgestattet sein, der im vorliegenden Ausführungsbeispiel durch eine Umbiegung des Drahtstückes erhalten wird.

Der erfindungsgemässe Kippdübel kann mehrfach verwendet werden, es ist möglich, im Einsatz stehende Kippdübel herauszunehmen und zu kontrollieren, insbesondere auf Korrosion, so dass ein Bruch eines Kippdübels wegen Korrosion vermieden werden können sollte. Diese Kippdübel können beispielsweise aus Stahl hergestellt sein, selbstverständlich sind auch andere geeignete Materialien denkbar, je nachdem, wie diese Kippdübel eingesetzt werden.

## Patentansprüche

1. Kippdübel zur Befestigung an einem Tragteil (10), der mit einer Bohrung (9) ausgestattet ist und dessen hinterseitige Fläche (11) einen nicht zugänglichen Hohlraum begrenzt, welcher Kippdübel (1) einen Schaft (2) und einen am Schaft (2) angebrachten Bügel umfasst, in welchem ein Kipphebel (4) derart um eine Schwenkachse (15) schwenkbar gelagert ist, dass dieser zum Einführen durch die Bohrung (9) des Tragteils (10) im wesentlichen in Längsachsenrichtung des Schaftes (2) ausrichtbar ist und im eingeführten Zustand im wesentlichen quer zur Längsachse des Schaftes (2) umschwenkbar ist, **dadurch gekennzeichnet, dass** im Schaft (2) eine im wesentlichen längs dazu verlaufende Öffnung (13) angebracht ist, deren kipphebelseitige Mündung (14) so angeordnet ist, dass sie zur Schwenkachse (15) versetzt ist, und dass in diese Öffnung (13) ein stiftförmiges Element (19) einsetzbar und längsverschiebbar ist.

2. Kippdübel nach Anspruch 1, **dadurch gekennzeichnet, dass** der Schaft (2) mindestens in einem kipphebelseitigen Teilbereich mit einem Gewinde (3) versehen ist, auf welches eine Spannmutter (12) aufschraubbar ist.

3. Kippdübel nach Anspruch 1 oder 2, **dadurch gekennzeichnet, dass** der Bügel aus einem in den Schaft (2) eingebrachten Schlitz (5) besteht, und dass der Kipphebel (4) zwischen den beiden durch den Schlitz (5) gebildeten Stege (6, 7) angeordnet ist und um einen Bolzen (8), der in den beiden Stegen (6, 7) gehalten ist und die Schwenkachse (15) bildet, schwenkbar ist.

4. Kippdübel nach Anspruch 3, **dadurch gekennzeichnet, dass** der Kipphebel (4) eine Breite aufweist, die kleiner ist, als die Breite des in den Schaft (2) eingebrachten Schlitzes (5), und dass der eine Endbereich des Kipphebels (4) mit einer Verdickung (18) ausgestattet ist, während der andere Endbereich eine Anschlagfläche (16) aufweist, die mit einer entsprechenden im Grund des Schlitzes (5) angebrachten Anschlagfläche (17) zusammenwirkt, wodurch die Schwenkbewegung des Kipphebels (4) von der quer zur Längsachse des Schaftes (2) umgeschwenkten Lage in die Längsachsenrichtung des Schaftes (2) begrenzt ist.

5. Kippdübel nach einem der Ansprüche 1 bis 4, **dadurch gekennzeichnet, dass** bei in Längsachsenrichtung ausgerichteter Lage des Kipphebels (4) dessen Abmessungen in radialer Richtung im wesentlichen nicht über die Mantelfläche des Schaftes (2) vorstehend sind.

6. Kippdübel nach einem der Ansprüche 1 bis 5, **dadurch gekennzeichnet, dass** die Öffnung (13) als Bohrung ausgebildet ist, die längs innerhalb des Schaftes (2) verläuft.

7. Kippdübel nach Anspruch 6, **dadurch gekennzeichnet, dass** die Bohrung (13) im Schaft (2) im wesentlichen diagonal ausgerichtet ist.

8. Kippdübel nach einem der Ansprüche 1 bis 7, **dadurch gekennzeichnet, dass** das stiftförmige Element (19) aus einem Drahtstück gebildet ist, dessen dem in die Öffnung (13) des Schaftes (2) einführbaren Bereich gegenüberliegende Endbereich mit einem Handgriff (22) ausgestattet ist.
